# EUROPÄISCHE PATENTSCHRIFT

(11) **EP 1 468 318 B1**
(45) Veröffentlichungstag und Bekanntmachung des Hinweises auf die Patenterteilung: **11.04.2007**
(21) Anmeldenummer: 02774247.7
(22) Anmeldetag: 21.11.2002
(51) Int. Cl.: G02B 6/38

(54) **HÜLSENAUFNAHME FÜR DIE KUPPLUNG EINER OPTISCHEN STECKVERBINDUNG**
SLEEVE RECEIVING ELEMENT FOR THE COUPLING OF AN OPTICAL PLUG-TYPE CONNECTOR
ELEMENT RECEPTEUR DE MANCHON POUR LE COUPLAGE D'UNE CONNEXION OPTIQUE PAR ENFICHAGE

(30) Priorität: 24.01.2002 CH 113022002
(43) Veröffentlichungstag der Anmeldung: 20.10.2004
(73) Patentinhaber: Hubert & Suhner AG, 9100 Herisau (CH)
(72) Erfinder: GREUB, Daniel, 9000 St. Gallen (CH)
(74) Vertreter: Ottow, Jens M.
(86) Internationale Anmeldenummer: PCT/CH2002/000628
(87) Internationale Veröffentlichungsnummer: WO 2003/062892

(56) Entgegenhaltungen:
- JP-A- 2 033 110
- JP-A- 5 034 549
- US-A- 4 738 508
- US-A- 5 781 680
- PATENT ABSTRACTS OF JAPAN vol. 009, no. 314 (P-412), 10. Dezember 1985 (1985-12-10) & JP 60 144707 A (FUJITSU KK), 31. Juli 1985 (1985-07-31) in der Anmeldung erwähnt

## Beschreibung

### TECHNISCHES GEBIET

Die vorliegende Erfindung bezieht sich auf das Gebiet der optischen Steckverbinder. Sie betrifft eine Hülsenaufnahme für die Kupplung einer optischen Steckverbindung gemäss dem Oberbegriff des Anspruchs 1.

Eine solche Hülsenaufnahme ist z.B. aus der Druckschrift JP-A-05034549 bekannt.

### STAND DER TECHNIK

Auf den Gebiet der optischen Steckverbindungen haben sich seit Jahren verschiedene Typen von Steckverbindern bewährt, die beispielsweise unter der Bezeichnung SC, FC oder ST bekannt sind. Bei diesen Steckverbindern werden die Enden mit dem Steckverbinder abgeschlossenen optischen Fasern in die zentrale Bohrung einer Ferrule eingeklebt, die meist aus einer Präzisionskeramik besteht. Um zwei optische Fasern miteinander zu verbinden, werden die zugehörigen Steckverbinder von gegenüberliegenden Seiten in eine Kupplung eingesteckt. Die Ferrulen werden dabei von gegenüberliegenden Seiten in eine in der Kupplung mit Spiel gelagerte, längsgeschlitzte Führungshülse ("sleeve") eingeschoben, bis sie mit den Stirnseiten aneinanderstossen (siehe z.B. die US-A-5,781,680).

Da der Kern einer solchen optischen Faser sehr dünn ist, müssen geeignete Massnahmen getroffen werden, um sicherzustellen, dass zwischen den Kernen der zu verbindenden optischen Fasern auch bei wiederholten Steckvorgängen regelmässig eine ausreichende optische Kopplung hergestellt werden kann. Eine dieser Massnahmen besteht beispielsweise darin, jedem der Steckverbinder in einer vorbestimmten Weise eine feste Orientierung in Drehrichtung um die Steckerachse zu geben (siehe dazu die US-A-4,738,508).

Es hat sich nun bei genaueren Untersuchungen herausgestellt, dass es zum Erreichen einer sicheren optischen Verbindung auch bei wiederholten Steckvorgängen von wesentlicher Bedeutung ist, dass auch die in der Kupplung angeordnete Führungshülse drehfest gelagert sein muss. Dies wird unter anderem auf die besonderen mechanischen Eigenschaften einer längsgeschlitzten, hohlzylindrischen Hülse zurückgeführt.

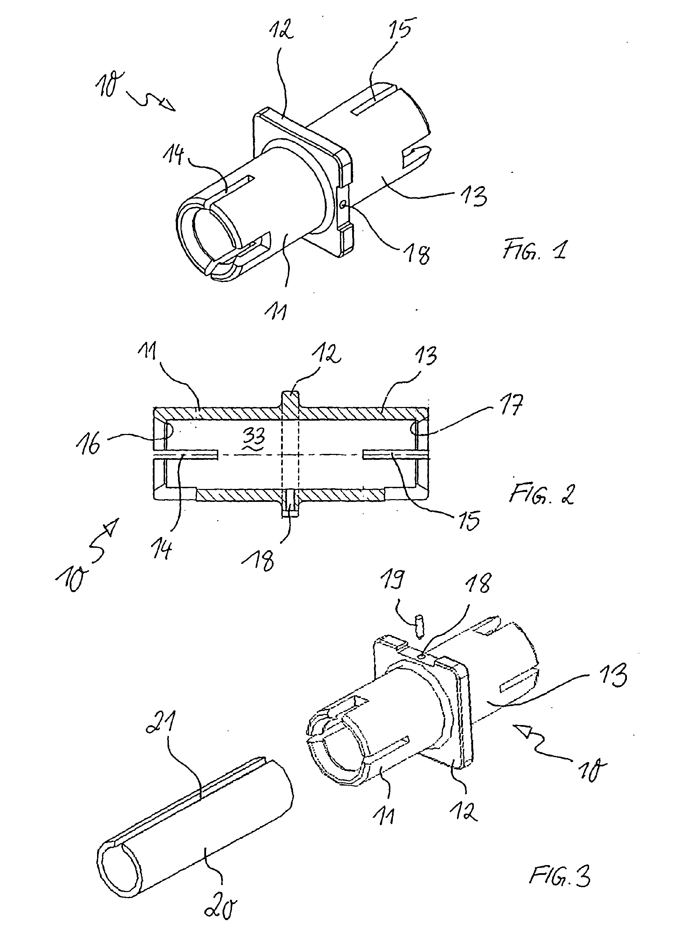

In der Druckschrift JP-A-60144707 ist zur drehsicheren Lagerung der geschlitzten Hülse eine Hülsenaufnahme vorgeschlagen worden (Fig. 5), die in ihrem für die Aufnahme der Hülse vorgesehenen Innenraum eine in die Wand eingelassene, in Längsrichtung verlaufende Nut aufweist. An der aus einem Blechabschnitt rundgebogenen Hülse werden entweder eine in Längsrichtung durchgehende Lasche oder zwei Laschen an den Enden der Hülse vorgesehen, die rechtwinklig in radialer Richtung nach aussen abgebogen sind und als Drehsicherung in die Nut der Hülsenaufnahme eingreifen. Es wird als Drehsicherung aber auch eine an der Innenwand der Hülsenaufnahme angeformte, in Längsrichtung verlaufende Rippe gezeigt (Fig. 1), die radial nach innen in den Längsschlitz der Hülse eingreift.

Diese bekannten Drehsicherungen haben jedoch Nachteile: Die Hülsen sind in der Hülsenaufnahme mit Spiel gelagert, so dass sie sich den eingesteckten Steckverbindern durch entsprechendes Verkippen anpassen können. Erstreckt sich die Drehsicherung jedoch über die gesamte Länge der Hülse oder ist an beiden Enden der Hülse angebracht - wie dies in der JP-A-60144707 vorgeschlagen wird - , wird das freie Spiel der Hülse in der Hülsenaufnahme erheblich eingeschränkt. Eine solche Einschränkung wirkt sich aber nachteilig auf die Qualität des Steckvorgangs und der optischen Verbindung aus.

Speziell die senkrecht abgebogenen Laschen an den aus einem Blechabschnitt hergestellten Hülsen lassen sich nur unter Schwierigkeiten herstellen und können bei Hülsen, die aus Keramik bestehen, praktisch nicht realisiert werden. Darüber hinaus wird durch die Laschen das mechanische Verhalten der Hülsen verändert, was sich auf die Führungsfunktion der Hülsen negativ auswirken kann.

Aus der eingangs genannten Druckschrift JP-A-05034549 ist eine Verdrehsicherung für eine Hülse bekannt, die im Mittelteil mit einem Nocken in den Schlitz der Hülse eingreift. Über die Hülsenaufnahme und den Einbau der Verdrehsicherung in die Aufnahme werden keine Angaben gemacht.

Aus der Druckschrift JP-A-02033110 ist schliesslich ein optischer Verbinder bekannt, bei dem die Kupplung mit der innenliegenden Hülse aus zwei zu einer Mittelebene spiegelsymmetrischen Teilen besteht. Als Verdrehsicherung ist an den Teilen eine nach innen vorstehende Nase angeformt, die in den Schlitz der Hülse eingreift. Dabei ist die Montage erschwert und die Materialauswahl für die Nase stark eingeschränkt.

### DARSTELLUNG DER ERFINDUNG

Es ist daher Aufgabe der Erfindung, eine Hülsenaufnahme mit einer Drehsicherung für die Hülse zu schaffen, welche die Nachteile der bekannten Lösungen vermeidet, und insbesondere das Spiel der Hülse in der Hülsenaufnahme nur unwesentlich beeinträchtigt.

Die Aufgabe wird durch die Gesamtheit der Merkmale des Anspruchs 1 gelöst. Der Kern der Erfindung besteht darin, die Verdrehsicherungsmittel im Mittelteil der zweiteiligen Hülsenaufnahme anzuordnen und auf den Mittelteil der Hülsenaufnahme zu beschränken. Hierdurch ist gewährleistet, dass die Hülse nur am Verdrehen um die Hülsenachse gehindert wird, aber ansonsten um einen in der Mitte liegenden Punkt weitestgehend in alle Richtungen verkippt werden kann und sich so optimal an die eingesteckten Steckverbinder anpassen kann.

Da die Hülsenaufnahme aus zwei separaten Aufnahmeteilen zusammengesetzt ist, ist es herstellungstechnisch besonders einfach, dass die Verdrehsicherungsmittel zwischen den Aufnahmeteilen angeordnet und gehalten sind.

Dies kann insbesondere in der Weise geschehen, dass die Aufnahmeteile an ihren einander gegenüberliegenden Enden Flanschteile aufweisen, die beim Zusammensetzen der Aufnahmeteile aneinanderstossen, und dass die Verdrehsicherungsmittel eine Sicherungsplatte umfassen, welche zwischen den Flanschteilen verdrehsicher gehalten wird und mit einem Nocken in den Schlitz der geschlitzten Hülse eingreift. Die verdrehsichere Halterung der Sicherungsplatte wird vorzugsweise dadurch erreicht, dass in den Flanschteilen Vertiefungen zur Aufnahme der Sicherungsplatte ausgebildet sind, und dass die Vertiefungen jeweils eine Randkontur aufweisen, die der Randkontur der Sicherungsplatte angepasst ist.

Vorzugsweise weist die Sicherungsplatte eine zentrale Öffnung zum Durchstecken der Hülse auf, wobei der Nocken am Innenrand der Öffnung angeordnet und derart ausgebildet ist, dass er in den Schlitz der geschlitzten Hülse eingreift, ohne in den Innenraum der Hülse hineinzuragen.

Weitere Ausführungsformen ergeben sich aus den abhängigen Ansprüchen.

### KURZE ERLÄUTERUNG DER FIGUREN

Die Erfindung soll nachfolgend anhand eines Ausführungsbeispiels sowie vergleichenden Beispielen, welche nicht der Erfindung entsprechen, im Zusammenhang mit den Zeichnungen näher erläutert werden. Es zeigen
- Fig. 1: in einer perspektivischen Seitenansicht eine vergleichende, einstückige Hülsenaufnahme mit einer Verdrehsicherung in Form eines Stiftes;
- Fig. 2: die Hülsenaufnahme aus Fig. 1 im Längsschnitt;
- Fig. 3: die Hülsenaufnahme aus Fig. 1 mit der zugehörigen Hülse und dem zugehörigen Stift in einer Explosionsdarstellung;
- Fig. 4: in einer perspektivischen Seitenansicht eine vergleichende, einstückige Hülsenaufnahme mit einer Verdrehsicherung in Form eines innenliegenden Nockens;
- Fig. 5: die Hülsenaufnahme aus Fig. 4 im Längsschnitt;
- Fig. 6: die Hülsenaufnahme aus Fig. 4 in der Ansicht von vorn; und
- Fig. 7: in einer Explosionsdarstellung eine zweiteilige Hülsenaufnahme gemäss einem bevorzugten Ausführungsbeispiel der Erfindung mit einer in der Mitte eingesetzten und mit einem inneren Nocken versehenen Sicherungsplatte.

### WEGE ZUR AUSFÜHRUNG DER ERFINDUNG

In Fig. 1 bis Fig. 3 ist in verschiedenen Ansichten eine vergleichende Hülsenaufnahme mit einer Verdrehsicherung in Form eines Stiftes dargestellt. Die Hülsenaufnahme 10 ist einstückig ausgebildet und beispielsweise als Spritzgussteil aus einem geeigneten Kunststoff gefertigt. Die Hülsenaufnahme 10, die sich in Längsrichtung entlang der Steckverbinderachse erstreckt, ist in drei Abschnitte unterteilt, nämlich einen ersten hohlzylindrischen Aufnahmeteil 11, einen Flansch 12, und einen zweiten hohlzylindrischen Aufnahmeteil 13. Die drei Abschnitte umgeben einen durchgehenden zylindrischen Innenraum 33 (Fig. 2), der die geschlitzte Hülse 20 (Fig. 3) aufnimmt und hält. Ein Herausrutschen der Hülse 20 aus dem Innenraum 33 wird dadurch verhindert, dass an den beiden äusseren Enden der Aufnahmeteile 11, 13 Hinterschneidungen 16, 17 vorgesehen sind, hinter denen die Hülse 20 beim Einschieben in die Hülsenaufnahme 10 einrastet. Das Einschieben der Hülse 20 in den Innenraum 33 wird dadurch erleichtert, dass die Aufnahmeteile 11, 13 an ihren äusseren Ende Schlitze 14, 15 aufweisen, die ein elastisches Aufweiten der geschlitzten Bereiche ermöglichen.

Die Aussenabmessungen der Hülse 20 sind so bemessen, dass die Hülse 20 im Innenraum 33 der Hülsenaufnahme 10 ein ausreichendes Spiel hat und sich insbesondere aus der Längsachse heraus verkippen kann. Ein Verdrehen der Hülse 20 um die eigene Längsachse wird dadurch verhindert, dass ein Stift 19 radial durch eine Bohrung 18 im Flansch 12 der Hülsenaufnahme 10 in den Innenraum 33 hineinragt und in den Schlitz 21 der Hülse 20 eingreift. Die Bohrung 18 verläuft dabei der Einfachheit halber parallel zu einer Seite des rechteckigen bzw. quadratischen Flansches 12. Der Stift 19 ist derart ausgebildet, dass er in den Schlitz 21 der geschlitzten Hülse 20 eingreift, ohne in den Innenraum der Hülse 20 hineinzuragen. Dadurch wird sicher vermieden, dass der in den Schlitz 21 eingreifende Stift 19 den Einsteckvorgang der Steckverbinder bzw. Ferrulen stört. Der Stift 19 verjüngt sich an seinem in den Schlitz 21 eingreifenden Ende konisch. Hierdurch wird der Eingriff in den Schlitz 21 wesentlich erleichtert.

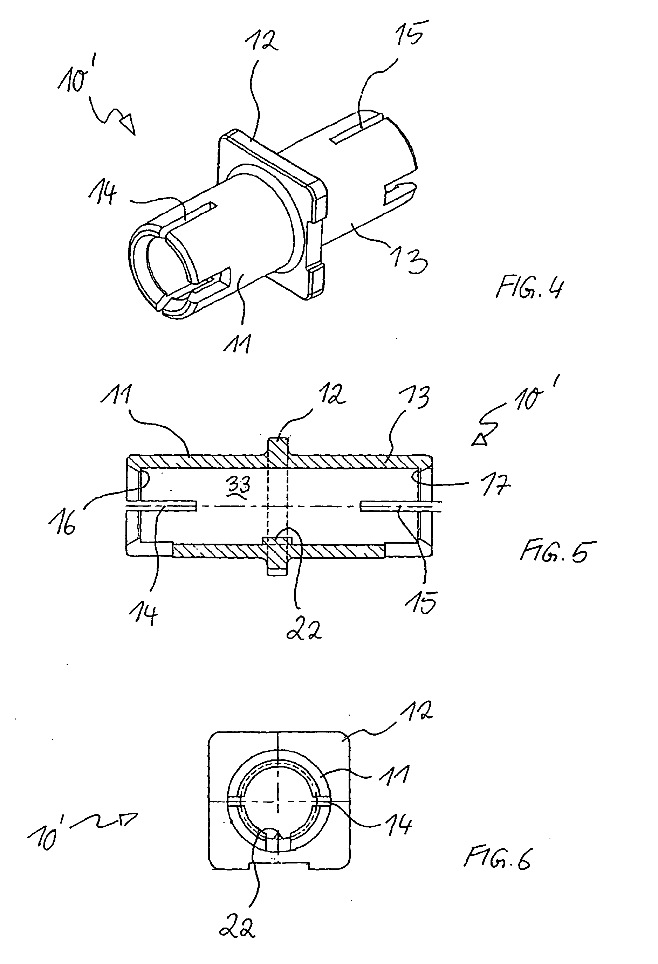

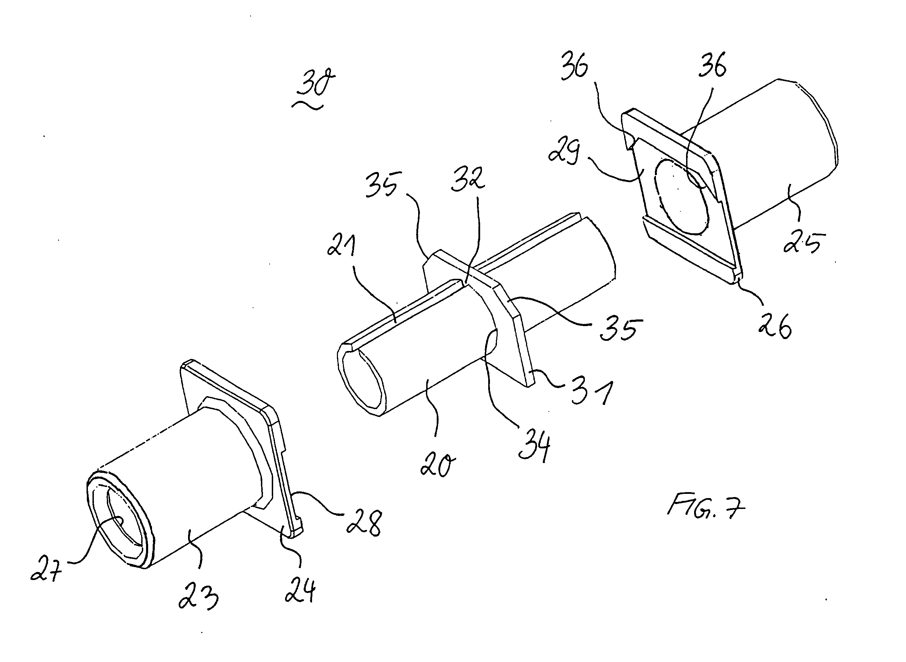

Ein weiteres vergleichendes Beispiel einer einstückigen Hülsenaufnahme mit Verdrehsicherung ist in den Fig. 4 bis 6 wiedergegeben. Die Hülsenaufnahme 10' ist in ihrer Grundform weitgehend gleichartig zu der in Fig. 1 bis Fig. 3 gezeigten Hülsenaufnahme 10 ausgebildet. Gleiche Teile sind daher auch mit gleichen Bezugszeichen versehen. Unterschiede ergeben sich hinsichtlich der Art der Verdrehsicherung. Die Verdrehsicherung der Hülsenaufnahme 10' ist ein innenliegender, an der Wand des Innenraums 33 im Mittelabschnitt angeformter Nocken 22 (Fig. 5), der sich in Längsrichtung in etwa über den Bereich des Flansches 12 erstreckt und einen dreieckigen Querschnitt aufweist (Fig. 6). Damit hat er in Einsteckrichtung eine zu dem konisch zugespitzten Stift 19 vergleichbare, für den Eingriff in den Schlitz 21 günstige Kontur. Auch der Nocken 22 ist derart ausgebildet, dass er in den Schlitz 21 der geschlitzten Hülse 20 eingreift, ohne in den Innenraum der Hülse 20 hineinzuragen. Die Länge des Nockens 22 ist so bemessen, dass er eine ausreichende mechanische Festigkeit aufweist, ohne die Bewegungsfreiheit der Hülse 20 im Innenraum 33 zu sehr zu beeinträchtigen.

Eine der Erfindung entsprechende Verdrehsicherung ergibt sich, wenn die Hülsenaufnahme nicht einstückig ist, sondern aus zwei zu einer Mittelebene im wesentlichen spiegelsymmetrischen Hälften zusammengesetzt ist. Eine solche Hülsenaufnahme 30 ist in Fig. 7 dargestellt. Die Hülsenaufnahme 30 besteht aus zwei separaten Aufnahmeteilen 23, 25 mit Hinterschneidung 27. Da die beiden Aufnahmeteile 23, 25 von zwei Seiten auf die Hülse 20 geschoben und dann miteinander verbunden werden können, brauchen die Aufnahmeteile 23, 25 an den äusseren Enden nicht geschlitzt zu sein. Beide Aufnahmeteile 23, 25 haben an den inneren Enden ein Flanschteil 24, 26 angeformt. Die beiden Flanschteile 24, 26 bilden - wenn die beiden Aufnahmeteile 23, 25 miteinander verbunden werden - einen zu Flansch 12 aus Fig. 1 oder 4 vergleichbaren Flansch. Auf den Aussenseiten der Flanschteile 24, 26 sind spiegelbildlich speziell konturierte, flache Vertiefungen 28, 29 vorgesehen, die eine Sicherungsplatte 31 mit entsprechender Randkontur verdrehsicher aufnehmen können. Die Randkonturen der Vertiefungen 28, 29 und der Sicherungsplatte 31 sind dabei vorzugsweise so aufeinander abgestimmt, dass die Sicherungsplatte 31 (mit der durchgesteckten Hülse 20) - ohne zu verdrehen - ein ausreichendes radiales Spiel hat.

Damit die Sicherungsplatte 31 in den Vertiefungen 28, 29 der Aufnahmeteile 23. 25 nur in einer bestimmten Drehwinkelorientierung aufgenommen werden kann, sind an der Sicherungsplatte 31 und den Aufnahmeteilen 23, 25 Mittel zur Festlegung der Orientierung vorgesehen. Im Ausführungsbeispiel der Fig. 7 sind dies zwei Abschrägungen 35 an den (oberen) Ecken der Sicherungsplatte 31 und zwei korrespondierende Abschrägungen 36 an den Randkonturen der Vertiefungen 28, 29.

Die Sicherungsplatte 31, die beispielsweise als gestanztes Blechteil ausgebildet sein kann, hat in der Mitte eine kreisrunde Öffnung 34, an deren innerem Rand ein dreiecksförmiger Nocken 32 angeformt ist. Die Sicherungsplatte 31 kann mit der Öffnung über die Hülse 20 geschoben werden, wobei der Nocken 32 in den Schlitz 21 eingreift. Auch der Nocken 32 ist vorzugsweise derart ausgebildet, dass er in den Schlitz 21 der geschlitzten Hülse 20 eingreift, ohne in den Innenraum der Hülse 20 hineinzuragen.

Insgesamt ergibt sich mit der Erfindung eine Hülsenaufnahme mit Verdrehsicherung für die Hülse, die auf einfache Weise der Hülse im Innenraum der Hülsenaufnahme ein Maximum an Bewegungsfreiheit lässt

### BEZUGSZEICHENLISTE

- 10,10',30: Hülsenaufnahme (einstückig)
- 11,13: Aufnahmeteil (hohlzylindrisch)
- 12: Flansch
- 14,15: Schlitz
- 16,17,27: Hinterschneidung
- 18: Bohrung
- 19: Stift
- 20: Hülse ("sleeve")
- 21: Schlitz
- 22,32: Nocken
- 23,25: Aufnahmeteil
- 24,26: Flanschteil
- 28,29: Vertiefung
- 31: Sicherungsplatte
- 33: Innenraum (Hülsenaufnahme)
- 34: Öffnung
- 35,36: Abschrägung

## Patentansprüche

1. Hülsenaufnahme (30) mit einem Innenraum (33) zur Aufnahme und Halterung einer in Längsrichtung geschlitzten, zylindrischen Hülse (20), die in der Kupplung einer optischen Steckverbindung zur Aufnahme der Ferrulen zweier von entgegengesetzten Richtungen eingeführter optischer Steckverbinder vorgesehen ist, wobei die Hülsenaufnahme (30) Mittel (31, 32) zum Sichem der Hülse (20) gegen ein Verdrehen um die Hülsenachse aufweist, wobei die Verdrehsicherungsmittel (31, 32) im Mittelteil der Hülsenaufnahme (30) angeordnet und auf den Mittelteil der Hülsenaufnahme (30) beschränkt sind und über einen in den Schlitz (21) der Hülse (20) eingreifenden Nocken (32) verfügen, so dass die Hülse (20) nur am Verdrehen um die Hülsenachse gehindert wird, aber ansonsten um einen im Mittelteil der Hülsenaufnahme (30) Liegenden Punkt weitestgehend in alle Richtungen verkippt werden kann, **dadurch gekennzeichnet, dass** die Hülsenaufnahme (30) aus zwei separaten, von zwei Seiten auf die Hülse (20) aufschiebbaren Aufnahmeteilen (23, 25) zusammengesetzt ist, und dass die Verdrehsicherungsmittel (31, 32) zwischen den Aufnahmeteilen (23, 25) angeordnet und gehalten sind.

2. Hülsenaufnahme nach Anspruch 1, **dadurch gekennzeichnet, dass** die Aufnahmeteile (23, 25) an ihren einander gegenüberliegenden Enden Flanschteile (24, 26) aufweisen, die beim Zusammensetzen der Aufnahmeteile (23, 25) aneinanderstossen und dass die Verdrehsicherungsmittel eine Sicherungsplatte (31) umfassen, an welche innenliegend der Nocken (32) angeformt ist und welche zwischen den Flanschteilen (24, 26) verdrehsicher gehalten wird.

3. Hülsenaufnahme nach Anspruch 2, **dadurch gekennzeichnet, dass** in den Flanschteilen (24, 26) Vertiefungen (28, 29) zur Aufnahme der Sicherungsplatte (31) ausgebildet sind, und dass die Vertiefungen (28, 29) jeweils eine Randkontur aufweisen, die der Randkontur der Sicherungsplatte (31), vorzugsweise unter Zulassen eines radialen Spiels, angepasst ist.

4. Hülsenaufnahme nach einem der Ansprüche 2 oder 3, **dadurch gekennzeichnet, dass** die Sicherungsplatte (31) eine zentrale Oeffnung (34) zum Durchstecken der Hülse (20) aufweist, und dass der Nocken (32) am Innenrand der Oeffnung (34) angeordnet ist.

5. Hülsenaufnahme nach einem der Ansprüche 2 bis 4, **dadurch gekennzeichnet, dass** der Nocken (32) derart ausgebildet ist, dass er in den Schlitz (21) der geschlitzten Hülse (20) eingreift, ohne in den Innenraum der Hülse (20) hineinzuragen.

6. Hülsenaufnahme nach einem der Ansprüche 2 bis 5, **dadurch gekennzeichnet, dass** an der Sicherungsplatte (31) und den Aufnahmeteilen (23, 25) Mittel (35, 36) zur Festlegung der Drehwinkelorientierung, insbesondere in Form von Abschrägungen (35, 36), vorgesehen sind.

## Claims

1. Sleeve holder (30) having an interior (33) for the reception and mounting of a longitudinally slotted cylindrical sleeve (20) which is provided in the coupling of an optical plug connection to receive the ferrules of two optical connectors introduced from opposite directions, wherein the sleeve holder (30) has means (31, 32) to protect the sleeve (20) against twisting about the sleeve axis, wherein the twist-protection means (31, 32) are disposed in the middle part of the sleeve holder (30) and are confined to the middle part of the sleeve holder (30) and have a cam (32) that engages in the slot (21) of the sleeve (20), so that the sleeve (20) is merely prevented from twisting about the sleeve axis but can otherwise be tilted broadly in all directions about a point situated in the middle part of the sleeve holder (30), **characterized in that** the sleeve holder (30) is composed of two separate receiving parts (23, 25) which can be slipped onto the sleeve (20) from two sides, and **in that** the twist-protection means (31, 32) are disposed and held between the receiving parts (23, 25).

2. Sleeve holder according to Claim 1, **characterized in that** the receiving parts (23, 25) have at their mutually opposing ends flange parts (24, 26), which butt against each other when the receiving parts (23, 25) are put together, and **in that** the twist-protection means comprise a locking plate (31), onto which the cam (32) is moulded on the inside and which is held in a torsionally secure manner between the flange parts (24, 26).

3. Sleeve holder according to Claim 2, **characterized in that** in the flange parts (24, 26) recesses (28, 29) are made for the reception of the locking plate (31), and **in that** the recesses (28, 29) respectively have a marginal contour matched to the marginal contour of the locking plate (31), preferably allowing a radial play.

4. Sleeve holder according to one of Claims 2 or 3, **characterized in that** the locking plate (31) has a central opening (34) for the passage of the sleeve (20), and **in that** the cam (32) is disposed on the inner rim of the opening (34).

5. Sleeve holder according to one of Claims 2 to 4, **characterized in that** the cam (32) is configured such that it engages in the slot (21) of the slotted sleeve (20) without jutting into the interior of the sleeve (20).

6. Sleeve holder according to one of Claims 2 to 5, **characterized in that** on the locking plate (31) and the receiving parts (23, 25) there are provided means (35, 36) for fixing the orientation of the rotation angle, in particular in the form of bevels (35, 36).

## Revendications

1. Récepteur de manchon (30) comprenant un espace interne (33) pour recevoir et retenir un manchon cylindrique (20) fendu dans la direction longitudinale, qui est prévu dans le couplage d'un connecteur optique pour recevoir les ferrules de deux connecteurs optiques insérés depuis des directions opposées, le récepteur de manchon (30) présentant des moyens (31, 32) pour fixer le manchon (20) contre toute rotation autour de l'axe du manchon, les moyens de fixation en rotation (31, 32) étant disposés dans la partie centrale du récepteur de manchon (30) et étant limités à la partie centrale du récepteur de manchon (30) et disposant d'une came (32) venant en prise dans la fente (21) du manchon (20), de sorte que le manchon (20) ne puisse pas tourner autour de l'axe du manchon, mais puisse par ailleurs être basculé autour d'un point situé dans la partie centrale du récepteur de manchon (30) essentiellement dans toutes les directions, **caractérisé en ce que** le récepteur de manchon (30) est constitué de deux parties de récepteur (23, 25) séparées, pouvant être poussées depuis deux côtés sur le manchon (20), et **en ce que** les moyens de fixation en rotation (31, 32) sont disposés et maintenus entre les parties de récepteur (23, 25).

2. Récepteur de manchon selon la revendication 1, **caractérisé en ce que** les parties de récepteur (23, 25) présentent à leurs extrémités opposées des parties de bride (24, 26) qui sont mises bout à bout lors de l'assemblage des parties de récepteur (23, 25) et **en ce que** les moyens de fixation en rotation comprennent une plaque de fixation (31) sur laquelle est moulée la came (32) du côté intérieur et qui est maintenue fixe en rotation entre les parties de bride (24, 26).

3. Récepteur de manchon selon la revendication 2, **caractérisé en ce que** des renfoncements (28, 29) sont réalisés dans les parties de bride (24, 26) pour recevoir la plaque de fixation (31), et **en ce que** les renfoncements (28, 29) présentent chacun un contour périphérique qui est adapté au contour périphérique de la plaque de fixation (31), de préférence en autorisant un jeu radial.

4. Récepteur de manchon selon l'une quelconque des revendications 2 ou 3, **caractérisé en ce que** la plaque de fixation (31) présente une ouverture centrale (34) pour le passage du manchon (20), et **en ce que** la came (32) est disposée sur le bord intérieur de l'ouverture (34).

5. Récepteur de manchon selon l'une quelconque des revendications 2 à 4, **caractérisé en ce que** la came (32) est réalisée de telle sorte qu'elle vienne en prise dans la fente (21) du manchon fendu (20), sans pénétrer dans l'espace intérieur du manchon (20).

6. Récepteur de manchon selon l'une quelconque des revendications 2 à 5, **caractérisé en ce que** des moyens (35, 36) pour fixer l'orientation de l'angle de rotation, notamment sous forme de biseaux (35, 36), sont prévus sur la plaque de fixation (31) et les parties de récepteur (23, 25) .
